(19)

Europäisches Patentamt
European Patent Office
Office européen des brevets

(11)  EP 4 484 254 A1

(12)  EUROPEAN PATENT APPLICATION

(43) Date of publication:
01.01.2025  Bulletin 2025/01

(21) Application number: 24183315.1

(22) Date of filing: 20.06.2024

(51) International Patent Classification (IPC):
B62D 5/00 (2006.01)        B62D 5/04 (2006.01)

(52) Cooperative Patent Classification (CPC):
B62D 5/001; B62D 5/0481; B60R 16/027;
B62D 5/0457; B62D 5/0469; B62D 5/0484

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.06.2023 JP 2023105309

(71) Applicant: JTEKT CORPORATION
Kariya-shi, Aichi-ken, 448-8652 (JP)

(72) Inventors:
• IKEYA, Mika
  Kariya-shi, Aichi-ken, 448-8652 (JP)
• ABE, Kenichi
  Kariya-shi, Aichi-ken, 448-8652 (JP)

• KAJISAWA, Yuuta
  Kariya-shi, Aichi-ken, 448-8652 (JP)
• HASEGAWA, Kazuma
  Kariya-shi, Aichi-ken, 448-8652 (JP)
• KOUDAI, Takashi
  Kariya-shi, Aichi-ken, 448-8652 (JP)
• MONOBE, Kaishi
  Kariya-shi, Aichi-ken, 448-8652 (JP)
• MASUDA, Tomihide
  Toyota-shi, Aichi-ken, 471-8571 (JP)
• YAMASHITA, Masaharu
  Toyota-shi, Aichi-ken, 471-8571 (JP)

(74) Representative: Winter, Brandl - Partnerschaft mbB
Alois-Steinecker-Straße 22
85354 Freising (DE)

(54)  **STEERING CONTROL DEVICE AND STEERING CONTROL METHOD**

(57)     A steering control device (1) includes a processor (50a) that controls a steering unit (4) that uses a reaction force motor (13) as a drive source. The processor (50a) is configured to execute an integrated rotation angle acquisition process of acquiring an integrated rotation angle that is an integrated value of the rotation angle of a steering shaft (11), based on a detection result of an angle sensor (42). The processor (50a) is configured to execute an abnormality determination process of determining whether an abnormality condition for detecting an abnormality of a stopper mechanism (11b) is satisfied, based on the integrated rotation angle. The abnormality determination process includes a process of determining that the abnormality condition is satisfied, when the processor (50a) is capable of determining that the integrated rotation angle is out of a regulatory rotation amount.

FIG. 5

```
┌───────────────────────────┐
│  FIRST ABNORMALITY        │
│  DETECTION PROCESS        │
└───────────────────────────┘
             │
             ▼            ┌─302
      ┌──────────────────┐
      │   REFER TO θs    │
      └──────────────────┘
             │            ┌─304
             ▼
        ⟨ |θs|≥Lth1? ⟩ ──NO──┐
             │ YES           │
             ▼          ┌─306 │
      ┌──────────────────┐   │
      │ SET FIRST FAIL   │   │
      │     STATE        │   │
      └──────────────────┘   │
             │◄──────────────┘
             ▼
         ┌────────┐
         │  END   │
         └────────┘
```

EP 4 484 254 A1

**Description**

BACKGROUND OF THE INVENTION

1. Field of the Invention

The present invention relates to a steering control device and a steering control method.

2. Description of Related Art

For example, Japanese Unexamined Patent Application Publication No. 2020-69844 describes a vehicle steering system in which a steering unit and a turning unit are mechanically separated. In such a vehicle steering system, the rotation range of a steering shaft included in the steering unit is not restricted by the turning unit that is mechanically separated from the steering unit. Therefore, the steering unit includes a stopper mechanism for mechanically restricting the rotation range of the steering shaft.

SUMMARY OF THE INVENTION

In the above steering system, for example, when the stopper mechanism becomes incapable of mechanically restricting the rotation range of the steering shaft, such a matter that the steering shaft continues to rotate unlimitedly occurs. For coping with this matter, it is desirable to detect that the mechanical restriction of the rotation range of the steering shaft is impossible at an early stage.

A steering control device according to a first aspect of the present invention is applied to a vehicle steering system having a structure in which a dynamic power transmission path between a steering unit and a turning unit is cut off, the steering unit being configured to be steered by a steering wheel of a vehicle, the turning unit being configured to operate so as to turn a turning wheel of the vehicle. The steering unit includes a steering shaft coupled to the steering wheel, a reaction force motor configured to give a motor torque to the steering shaft so as to give a steering reaction force to the steering wheel, a stopper mechanism configured to regulate a rotation of the steering shaft in a right-left direction within a regulatory rotation amount, and an angle sensor configured to detect a rotation angle of the steering shaft. The steering control device includes a processor that controls the steering unit, the steering unit using the reaction force motor as a drive source. The processor is configured to execute: an integrated rotation angle acquisition process of acquiring an integrated rotation angle based on a detection result of the angle sensor, the integrated rotation angle being an integrated value of the rotation angle of the steering shaft; and an abnormality determination process of determining whether an abnormality condition is satisfied, based on the integrated rotation angle, the abnormality condition being a condition for detecting an abnormality of the stopper mechanism. The abnormality determination process includes a process of determining that the abnormality condition is satisfied, when the processor is capable of determining that the integrated rotation angle is out of the regulatory rotation amount.

In the above configuration, the processor includes the abnormality determination process of detecting the abnormality of the stopper mechanism using software. Thereby, in the vehicle steering system, for example, even when the stopper mechanism becomes incapable of mechanically restricting the rotation range of the steering shaft, early detection is possible. Accordingly, even when such a matter that the steering shaft continues to rotate unlimitedly occurs, it is possible to cope with this matter at an early stage.

In the steering control device according to the first aspect of the present invention, the integrated rotation angle acquisition process may include a process of acquiring a first absolute rotation angle in a first state where a reference value indicating a neutral position of the steering wheel has been internally set, the first absolute rotation angle being the integrated rotation angle with respect to the reference value, and a process of acquiring a second absolute rotation angle in a second state where the reference value has not been internally set, the second absolute rotation angle being the integrated rotation angle for which the reference value is not used as a reference. The abnormality determination process may include a first abnormality determination process of determining that the abnormality condition is satisfied, based on the first absolute rotation angle, in the first state, and a second abnormality determination process of determining that the abnormality condition is satisfied, based on the second absolute rotation angle, in the second state.

In the above configuration, the processor includes a process in which the satisfaction requirement of the abnormality condition is different depending on whether the state is the first state or the second state. Thereby, in the vehicle steering system in which the first state and the second state can be set, it is possible to appropriately determine that the integrated rotation angle is out of the regulatory rotation amount, regardless of the state. Accordingly, it is possible to detect the abnormality of the stopper mechanism at an early stage, regardless of whether the reference value has been internally set.

In the steering control device according to the first aspect of the present invention, the first abnormality determination process may be a process of determining that the abnormality condition is satisfied, when the processor is capable of determining that the magnitude of the first absolute rotation angle is equal to or more than a first threshold. The first threshold may be a value that is equal to or more than half of the regulatory rotation amount. The second abnormality determination process may be a process of determining that the abnormality condition is satisfied, when the processor is capable of determining that the magnitude of the second absolute rotation angle is equal to or more than a second threshold. The second threshold may be a value that is equal to or more than the regulatory rotation amount.

In the above configuration, in the first abnormality determination process, when the magnitude of the first absolute rotation angle is determined in the first state, the first threshold is used, and thereby, it is possible to appropriately determine the abnormality of the stopper mechanism. On the other hand, in the second abnormality determination process, when the magnitude of the second absolute rotation angle is determined in the second state, the second threshold different from the first threshold is used, and thereby, it is possible to appropriately determine the abnormality of the stopper mechanism. Thereby, it is possible to execute the determination depending on the first state and the second state.

In the steering control device according to the first aspect of the present invention, the steering unit may include a lock mechanism configured to mechanically lock the rotation of the steering shaft. The second state may be a state to which the steering control device transitions from a state where the lock mechanism locks the rotation of the steering shaft. The first state includes a state to which the steering control device transitions after the second state. The second threshold may be a value for which the first threshold and at least an adjustment amount relevant to the configuration of the lock mechanism are considered.

For example, as a supposable initial state of the steering wheel in the second state, a situation where the steering wheel rotates until just before the transition to the state corresponding to the first threshold is possible. In this situation, when the lock mechanism locks the rotation of the steering shaft, it is possible to assume that the steering wheel rotates beyond the first threshold due to the configuration of the lock mechanism. However, the second threshold is a value for which the adjustment amount relevant to the configuration of the lock mechanism is considered. Thereby, it is possible to appropriately detect the abnormality of the stopper mechanism.

In the steering control device according to the first aspect of the present invention, the reference value may be a value that is acquired by a learning operation in which the steering shaft is moved to a limit position in a first direction and a limit position in a second direction. The processor may be configured to execute a learning process in the second state, the learning process being a process for internally setting the reference value by the learning operation. The learning process may include a process of acquiring, during the learning operation, a first limit position that is an angle corresponding to a position of the steering shaft at the limit position in the first direction and a second limit position that is an angle corresponding to a position of the steering shaft at the limit position in the second direction, and a process of setting the reference value based on the limit position acquired for each direction.

In the above configuration, it is possible to appropriately detect the abnormality of the stopper mechanism, even during the learning operation.

A steering control method according to a second aspect of the present invention is a method that is applied to a vehicle steering system having a structure in which a dynamic power transmission path between a steering unit and a turning unit is cut off, the steering unit being configured to be steered by a steering wheel of a vehicle, the turning unit being configured to operate so as to turn a turning wheel of the vehicle. The steering control method includes controlling the steering unit by a processor, the steering unit using a reaction force motor as a drive source, the reaction force motor being configured to give a motor torque to a steering shaft coupled to the steering wheel, so as to give a steering reaction force to the steering wheel. The controlling the steering unit by the processor includes: acquiring an integrated rotation angle based on a detection result of an angle sensor configured to detect a rotation angle of the steering shaft, the integrated rotation angle being an integrated value of the rotation angle of the steering shaft; and determining whether an abnormality condition is satisfied, based on the integrated rotation angle, the abnormality condition being a condition for detecting an abnormality of a stopper mechanism configured to regulate the rotation of the steering shaft in a right-left direction within a regulatory rotation amount. The determining whether the abnormality condition is satisfied includes determining that the abnormality condition is satisfied, when the processor is capable of determining that the integrated rotation angle is out of the regulatory rotation amount.

With the steering control device according to the first aspect of the present invention and the steering control method according to the second aspect of the present invention, even when such a matter that the steering shaft continues to rotate unlimitedly occurs, it is possible to cope with this matter at an early stage.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram showing the configuration of a steer-by-wire type steering device according to an embodiment;
FIG. 2 is a block diagram showing the electric configuration of a steering control device in FIG. 1;
FIG. 3 is a flowchart for describing a processing procedure of an end output process;
FIG. 4 is a flowchart for describing a processing procedure of a learning process;
FIG. 5 is a flowchart for describing a processing procedure of a first abnormality detection process;
FIG. 6 is a flowchart for describing a processing procedure of a second abnormality detection process; and

FIG. 7 is a diagram for describing a first threshold and a second threshold.

## DETAILED DESCRIPTION OF EMBODIMENTS

A steering control device according to an embodiment will be described. A vehicle steering system 2 includes a steering control device 1. The vehicle steering system 2 includes a steering unit 4 and a turning unit 6. The steering unit 4 is steered by a driver through a steering wheel 3 of a vehicle that is a steering member. The turning unit 6 turns right and left turning wheels 5 of the vehicle, in response to the steering that is input to the steering unit 4 by a driver. For example, the vehicle steering system 2 in the embodiment has a structure in which a dynamic power transmission path between the steering unit 4 and the turning unit 6 is mechanically cut off at all times. A dynamic power transmission path between a later-described steering actuator 12 and a later-described turning actuator 31 is mechanically cut off at all times. That is, the vehicle steering system 2 includes a steer-by-wire type steering device.

The steering unit 4 includes a steering shaft 11, the steering actuator 12, a spiral cable mechanism, and a lock mechanism 16. The steering shaft 11 is coupled to the steering wheel 3. At an end portion 11a of the steering shaft 11 on the opposite side of a side on which the steering shaft 11 is coupled to the steering wheel 3, a stopper mechanism 1 1b is provided. The stopper mechanism 11b specifies the rotation range of the steering shaft 11. Thereby, the rotation range of the steering wheel 3 that rotates integrally with the steering shaft 11 is specified by the stopper mechanism 11b. For example, the steering wheel 3 can rotate within a regulatory rotation amount $\theta1$ such that the rotation range is a range between a rightward limit position 3a and a leftward limit position 3b.

The steering actuator 12 includes a reaction force motor 13 and a steering-side speed reduction mechanism 14. The reaction force motor 13 is a steering-side motor that gives a steering reaction force that is a force against the steering of the steering wheel 3, to the steering wheel 3 through the steering shaft 11. For example, the reaction force motor 13 is coupled to the steering wheel 3 through the steering-side speed reduction mechanism 14 that is constituted by a worm and wheel. As the reaction force motor 13 in the embodiment, for example, a three-phase brushless motor is employed.

The spiral cable mechanism is coupled to the steering wheel 3. The spiral cable mechanism includes a first housing 15a, a second housing 15b, a tubular member 15c, and a spiral cable 15d. The first housing 15a is fixed to the steering wheel 3. The second housing 15b is fixed to a vehicle body. The tubular member 15c is fixed to the second housing 15b, and is housed in a space that is made by the first housing 15a and the second housing 15b. The spiral cable 15d is wound around the tubular member 15c. The steering shaft 11 is inserted into the tubular member 15c. For example, the spiral cable 15d is an electric wire that connects a horn, an air bag and others fixed to the steering wheel 3, with a battery 47 or the like. A total length Lca of the spiral cable 15d is sufficiently longer than the distance from the horn, the air bag and others to the battery 47. Within a range corresponding to the total length Lca, the rotation of the steering wheel 3 is allowed, and electric power is supplied to the horn, the air bag and others. Further, the total length Lca of the spiral cable 15d is sufficiently longer than the rotation range between the rightward limit position 3a and leftward limit position 3b in the stopper mechanism 11b, that is, the regulatory rotation amount $\theta1$ of the steering wheel 3.

The lock mechanism 16 is a mechanism for mechanically regulating the rotation of the steering wheel 3. For example, the lock mechanism 16 includes a motor and a lock bar. The lock bar moves between a lock position and an unlock position, in conjunction with the rotation of the motor. The lock position is a position of the lock bar where the lock bar is fit in a gear portion of the steering shaft 11. When the lock bar is at the lock position, the lock mechanism 16 is in a lock state where the rotation of the steering wheel 3 is regulated. The unlock position is a position of the lock bar where the fitting in the gear portion of the steering shaft 11 is released. When the lock bar is at the unlock position, the lock mechanism 16 is in an unlock state where the rotation of the steering wheel 3 is allowed.

The turning unit 6 includes a pinion shaft 21, a rack shaft 22, and a rack housing 23. The pinion shaft 21 and the rack shaft 22 are coupled to each other at a predetermined crossing angle. A pinion tooth 21a formed on the pinion shaft 21 engages with a rack tooth 22a formed on the rack shaft 22, and thereby, a rack-and-pinion mechanism 24 is constituted. The pinion shaft 21 corresponds to a rotation shaft allowing the conversion into a turning angle that is the turning position of the turning wheel 5. The rack housing 23 houses the rack-and-pinion mechanism 24.

One end of the pinion shaft 21 on the opposite side of a side on which the pinion shaft 21 is coupled to the rack shaft 22 protrudes from the rack housing 23. Both ends of the rack shaft 22 protrude from both ends of the rack housing 23 in the axial direction of the rack housing 23. Tie rods 26 are coupled to both ends of the rack shaft 22 through rack ends 25 each of which is a ball joint. Distal ends of the tie rods 26 are coupled to unillustrated knuckles to which the right and left turning wheels 5 are attached respectively.

The turning unit 6 includes the turning actuator 31. The turning actuator 31 includes a turning motor 32, a transmission mechanism 33, and a transformation mechanism 34. The turning motor 32 is a turning-side motor that gives a turning force for turning the turning wheels 5, to the rack shaft 22 through the transmission mechanism 33 and the transformation mechanism 34. For example, the turning motor 32 transmits rotation to the transformation mechanism 34 through the transmission mechanism 33 that is a belt transmission mechanism. For example, the transmission mechanism 33 transforms the rotation of the turning motor 32 into the reciprocating motion of the rack shaft 22 through the transformation mechanism 34 that is a ball screw mechanism. As the turning motor 32 in the embodiment, for example, a three-phase brushless motor is employed.

In the vehicle steering system 2, in response to the steering of the steering wheel 3 by the driver, the motor torque is given as the turning force from the turning actuator 31 to the rack shaft 22, and thereby, the turning angle of the turning wheels 5 is altered. At this time, the steering reaction force against the steering by the driver is given from the steering actuator 12 to the steering wheel 3. Thereby, in the vehicle steering system 2, a steering torque Th necessary for the steering of the steering wheel 3 is altered by the steering reaction force that is the motor torque given from the steering actuator 12.

The reason why the pinion shaft 21 is provided is because the rack shaft 22 is supported in the interior of the rack housing 23 together with the pinion shaft 21. By an unillustrated support mechanism that is provided in the vehicle steering system 2, the rack shaft 22 is supported so as to be capable of moving along the axial direction of the rack shaft 22, and is pressed to the pinion shaft 21. Thereby, the rack shaft 22 is supported in the interior of the rack housing 23. Another support mechanism for supporting the rack shaft 22 in the rack housing 23 may be provided without using the pinion shaft 21.

Electric Configuration of Steering Device

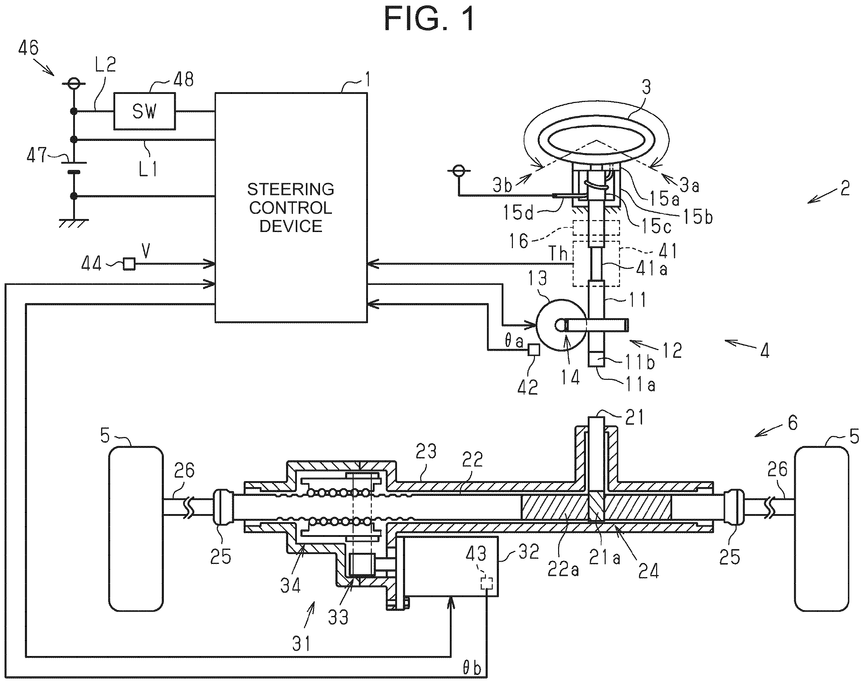

As shown in FIG. 1, the reaction force motor 13 and the turning motor 32 are connected to the steering control device 1. The steering control device 1 controls the actuations of the respective motors 13, 32.

To the steering control device 1, detection results of various sensors are input. Examples of the various sensors include a torque sensor 41, a steering-side rotational angle sensor 42, a turning-side rotational angle sensor 43, and a vehicle velocity sensor 44.

The torque sensor 41 is provided at a portion of the steering shaft 11 between the steering wheel 3 and the steering-side speed reduction mechanism 14. The torque sensor 41 detects a steering torque Th that is a value indicating a torque that is given to the steering shaft 11 by the steering of the steering wheel 3 by the driver. The steering torque Th is detected based on the torsion of a torsion bar 41a that is in the middle of the steering shaft 11 and that is provided in the steering shaft 11 between the steering wheel 3 and the steering-side speed reduction mechanism 14. The steering-side rotational angle sensor 42 is provided at the reaction force motor 13. The steering-side rotational angle sensor 42 detects a rota-

tional angle $\theta a$ that is the rotation angle of a rotation shaft of the reaction force motor 13 and that is an angle within a range of 360 degrees. The turning-side rotational angle sensor 43 is provided at the turning motor 32. The turning-side rotational angle sensor 43 detects a rotational angle $\theta b$ that is the rotation angle of a rotation shaft of the turning motor 32 and that is an angle within a range of 360 degrees. The vehicle velocity sensor 44 detects a vehicle velocity V that is the traveling velocity of the vehicle. In the embodiment, the steering-side rotational angle sensor 42 is an example of the angle sensor.

To the steering control device 1, an electric power source system 46 is connected. The electric power source system 46 includes a battery 47. The battery 47 is a secondary battery that is equipped in the vehicle, and is an electric power source of electric power that is supplied for operating the reaction force motor 13 and the turning motor 32. Further, the battery 47 is an electric power source of electric power that is supplied for operating the lock mechanism 16. Further, the battery 47 is an electric power source of electric power that is supplied for operating the steering control device 1.

A start switch 48 (a "SW" in FIG. 1) for the vehicle, as exemplified by an ignition switch, is provided between the steering control device 1 and the battery 47. The start switch 48 is provided in the middle of an electric supply line L2 that is of two electric supply lines L1, L2 connecting the steering control device 1 and the battery 47 and that diverges from the electric supply line L1. The start switch 48 is handled when various functions are started such that a traveling drive source for the vehicle, as exemplified by an engine, is actuated and the vehicle can operate. The electric continuity of the electric supply line L2 is turned on or off through the handling of the start switch 48. In the embodiment, the state of the operation of the vehicle steering system 2 is associated with the state of the operation of the vehicle. The electric supply line L1 is electrically continuous at all times, basically, but the electric continuity of the electric supply line L1 is indirectly turned on or off depending on the state of the operation of the vehicle steering system 2, as the function of the vehicle steering system 2. The state of the operation of the vehicle steering system 2 is associated with the on-off state of the electric continuity of the electric supply lines L1, L2, which is the state of the supply of the electric power of the battery 47. In the state of the operation of the vehicle steering system 2, the electric power source is turned on when the electric continuity of the electric supply lines L1, L2 is turned on based on the handling of the start switch 48. In the state of the operation of the vehicle steering system 2, the electric power source is turned off when the electric continuity of the electric supply lines L1, L2 is turned off based on the handling of the start switch 48.

The lock mechanism 16 switches between the lock state and the unlock state, depending on whether the electric power source is turned on or off. For example, the lock mechanism 16 becomes the lock state when the electric power source is turned off. In the lock state, the vehicle transitions to a state where the vehicle stops. Further, the lock mechanism 16 becomes the unlock state when the electric power source is turned on. In the unlock state, the vehicle transitions to a state where the vehicle can travel.

Function of Steering Control Device

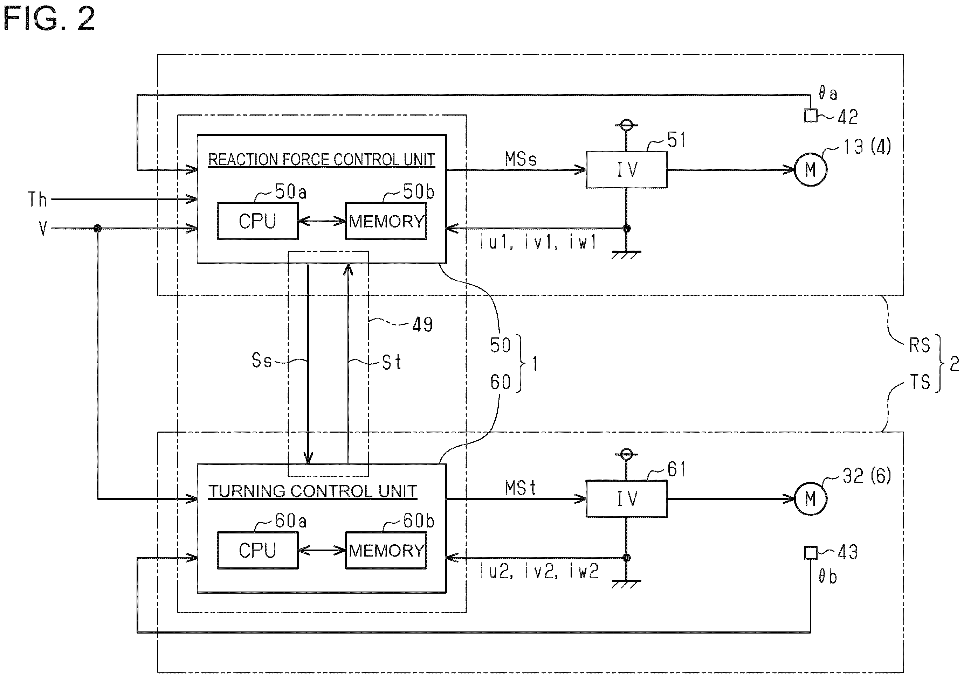

As shown in FIG. 2, the steering control device 1 includes a reaction force control unit 50 and a turning control unit 60. The reaction force control unit 50 controls the steering wheel 3 that is a control object. For controlling the steering reaction force that is a controlled variable of the control object, the reaction force control unit 50 controls the drive of the steering actuator 12, more specifically, the drive of the reaction force motor 13. The turning control unit 60 controls the rack shaft 22 that is a control object. For controlling the turning force that is a controlled variable of the control object, the turning control unit 60 controls the drive of the turning actuator 31, more specifically, the drive of the turning motor 32. For example, the reaction force control unit 50 and the turning control unit 60 mutually perform the sending and receiving of information through a local network 49 for serial communication or the like. The reaction force control unit 50 constitutes a reaction force system RS by being combined with the steering unit 4. The turning control unit 60 constitutes a turning system TS by being combined with the turning unit 6. In the embodiment, a process by which the reaction force control unit 50 controls the drive of the reaction force motor 13 is an example of a reaction force control process.

The reaction force control unit 50 includes a central processing unit (referred to as a "CPU" hereinafter) 50a and a memory 50b. The CPU 50a executes programs stored in the memory 50b, with a predetermined computation period, and thereby, the reaction force control unit 50 executes various processes. The turning control unit 60 includes a central processing unit (referred to as a "CPU" hereinafter) 60a and a memory 60b. The CPU 60a executes programs stored in the memory 60b, with a predetermined computation period, and thereby, the turning control unit 60 executes various processes. The CPUs 50a, 60a and the memories 50b, 60b constitute microcomputers that are processing circuits. The memories 50b, 60b include computer-readable media such as random access memories (RAMs) and read only memories (ROMs). The realization of various processes by software is an example. The processing circuits included in the reaction force control unit 50 and the turning control unit 60 may be configured such that at least some processes are realized by hardware circuits such as logic circuits.

The CPU 50a of the reaction force control unit 50 receives the steering torque Th, the vehicle velocity V, the rotational angle $\theta$a, and turning information St. The turning information St is information that is obtained from the turning control unit 60 through the local network 49. The CPU 50a computes a control signal MSs for controlling the steering reaction force, which is a signal to be output to a reaction force inverter 51, based on the steering torque Th, the vehicle velocity V, the rotational angle $\theta$a, and the turning information St. The reaction force inverter 51 is a drive circuit that transforms the direct-current voltage of the battery 47 into alternating-current voltage and that applies the alternating-current voltage to the reaction force motor 13. On that occasion, the CPU 50a refers to electric currents iu1, iv1, iw1 that flow through the reaction force motor 13. The electric currents iu1, iv1, iw1 are quantified as voltage drop quantities at shunt resistors that are provided at respective legs of the reaction force inverter 51. Thereby, the CPU 50a controls the drive of the reaction force motor 13, such that the motor torque that causes the steering reaction force is generated.

The CPU 50a converts the rotational angle $\theta$a into an integrated rotation angle that is an integrated value from a reaction force reference value $\theta$ns stored in the memory 50b, that is, into an absolute rotation angle. The absolute rotation angle is a value converted in a range exceeding 360° by counting the number of times of the rotation of the reaction force motor 13 from the reaction force reference value $\theta$ns. For example, the reaction force reference value $\theta$ns is a value indicating a straight-movement state that is the steering state of the steering wheel 3 when the vehicle moves straight. In the embodiment, the reaction force reference value $\theta$ns is a value indicating a steering neutral position that is the rotational position of the steering wheel 3 in the straight-movement state, and is an example of control information. The CPU 50a computes a steering angle $\theta$s by multiplying the absolute rotation angle obtained by the conversion by a conversion factor based on the rotation velocity ratio of the steering-side speed reduction mechanism 14. The CPU 50a computes the steering angle $\theta$s as an absolute angle with respect to the steering neutral position, that is, the reaction force reference value $\theta$ns. The steering angle $\theta$s obtained in this way is used in the computation of the control signal MSs. Steering information Ss that is used by the CPU 50a, as exemplified by the steering angle $\theta$s, is output to the turning control unit 60 through the local network 49.

The CPU 60a of the turning control unit 60 receives the vehicle velocity V, the rotational angle $\theta$b, and the steering information Ss. The steering information Ss is information that is obtained from the reaction force control unit 50 through the local network 49. The CPU 60a computes a control signal MSt for controlling the turning force, which is a signal to output to a turning inverter 61, based on the vehicle velocity V, the rotational angle $\theta$b, and the steering information Ss. The turning inverter 61 is a drive circuit that transforms the direct-current voltage of the battery 47 into alternating-current voltage and that applies the alternating-current voltage to the turning motor 32. On that occasion, the CPU 60a refers to electric currents iu2, iv2, iw2 that flow through the turning motor 32. The electric current iu2, iv2, iw2 are quantified as voltage drop quantities at shunt resistors that are provided at respective legs of the turning inverter 61. Thereby, the CPU 60a controls the drive of the turning motor 32, such that the motor torque that causes the turning force is generated.

The CPU 60a converts the rotational angle $\theta b$ into an integrated rotation angle that is an integrated value from a turning reference value $\theta nt$ stored in the memory 60b, that is, into an absolute rotation angle. The absolute rotation angle is a value converted in a range exceeding 360° by counting the number of times of the rotation of the turning motor 32 from the turning reference value $\theta nt$. For example, the turning reference value $\theta nt$ is a value indicating a straight-movement state that is the turning state of the rack shaft 22 when the vehicle moves straight. In the embodiment, the turning reference value $\theta nt$ is a value indicating a rack neutral position that is the position of the rack shaft 22 in the straight-movement state, and is an example of the control information. The CPU 60a computes a pinion angle $\theta p$ by multiplying the absolute rotation angle obtained by the conversion by a conversion factor based on the rotation velocity ratio of the transmission mechanism 33, a lead of the transformation mechanism 34, and the rotation velocity ratio of the rack-and-pinion mechanism 24. The CPU 60a computes the pinion angle $\theta p$ that is the actual rotational angle of the pinion shaft 21, as an absolute angle with respect to the rack neutral position, that is, the turning reference value $\theta nt$. The pinion angle $\theta p$ obtained in this way is used in the computation of the control signal MSt. The turning information St that is used by the CPU 60a, as exemplified by the pinion angle $\theta p$, is output to the reaction force control unit 50 through the local network 49.

State Transition of CPU of Reaction Force Control Unit

After the start switch 48 is turned on in the off-state of the electric power source and the electric power source is turned on, the CPU 50a executes an initial check process. Depending on whether an IG signal Sg output by the start switch 48 has been input, the CPU 50a determines whether the electric power source is in the on-state or in the off-state, and performs the switching between the lock state and the unlock state.

The initial check process includes a check process about the operation of the reaction force system RS, as exemplified by a check process about whether the CPU 50a and the memory 50b can normally operate. The initial check process includes a check process about the communication with the turning system TS, as exemplified by a check process about whether the turning information St can be input through the local network 49. The initial check process includes a process of making it possible to execute processes for the operation of the steering unit 4, as exemplified by a process of reading a variety of information from the memory 50b. The variety of information that is read from the memory 50b by the CPU 50a in the initial check process includes the content of the reaction force reference value $\theta ns$.

In the initial check process, in the case where the CPU 50a can read the reaction force reference value $\theta ns$, the CPU 50a transitions to an ordinary control state. In the initial check process, in the case where the reaction force reference value $\theta ns$ has been internally set, the CPU 50a can read the reaction force reference value $\theta ns$. The ordinary control state is a state of execution of an ordinary reaction force process about a steering control for operating the steering unit 4 in response to the steering of the steering wheel 3 by the driver. In the embodiment, the ordinary control state is an example of the first state.

For example, the ordinary reaction force process includes an integrated rotation angle acquisition process for computing the steering angle $\theta s$ that is an integrated value that is obtained using the reaction force reference value $\theta ns$ as a reference value, by referring to the rotational angle $\theta a$. The ordinary reaction force process includes an end reaction force output process for avoiding the steering wheel 3 from rotating beyond the regulatory rotation amount $\theta 1$, based on the steering angle $\theta s$.

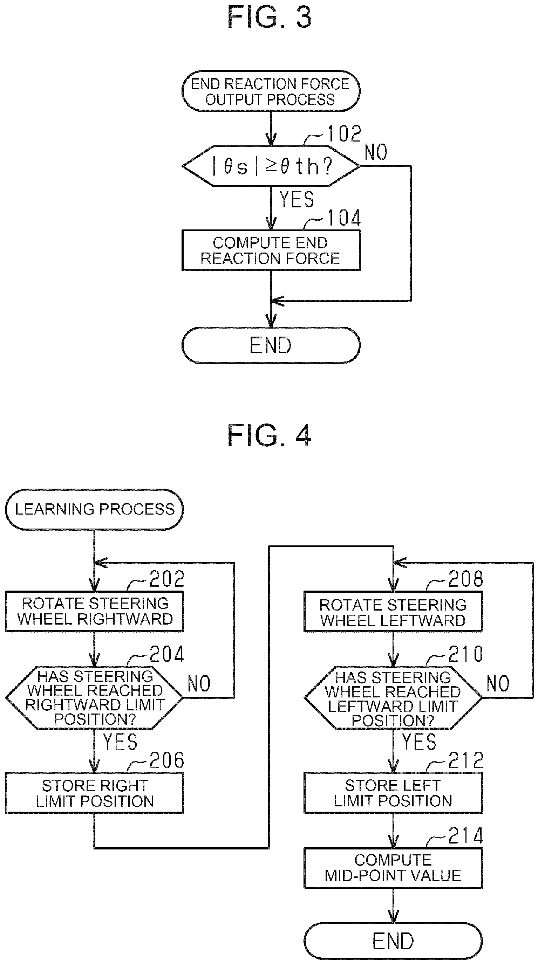

More specifically, as shown in FIG. 3, in the end reaction force output process, the CPU 50a determines whether the absolute value of the steering angle $\theta s$ is equal to or more than an end threshold $\theta th$ (step 102). In step 102, the CPU 50a determine whether the steering angle $\theta s$ is close to one of the rightward limit position 3a and the leftward limit position 3b. For example, the end threshold $\theta th$ is a value corresponding to positions that are slightly away from the rightward limit position 3a and the leftward limit position 3b to the steering neutral position side, that is, the reaction force reference value $\theta ns$ side. That is, the end threshold $\theta th$ is a value that is slightly smaller than the absolute value of the rightward limit position 3a and the leftward limit position 3b.

Subsequently, in the case where the absolute value of the steering angle $\theta s$ is less than the end threshold $\theta th$ (step 102; NO), the CPU 50a ends the process, and transitions to another process. On the other hand, in the case where the absolute value of the steering angle $\theta s$ is equal to or more than the end threshold $\theta th$ (step 102: YES), the CPU 50a computes an end reaction force (step 104). In step 104, the CPU 50a computes an end reaction force for informing the driver that the steering angle $\theta s$ is close to the rightward limit position 3a or the leftward limit position 3b. For example, the end reaction force is a value in a range that is evaluated by experiments such that the steering by the driver can be regulated. The end reaction force is a component for rapidly increasing the steering reaction force. The end reaction force computed in this way is reflected in the steering reaction force depending on the steering by the driver, and thereby, a further steering by the driver to the rightward limit position 3a or leftward limit position 3b beyond the end threshold θth is regulated. Thereafter, the CPU 50a ends the process, and transitions to another process.

On the other hand, in the initial check process, in the case where the CPU 50a cannot read the reaction force reference value θns, the CPU 50a transitions to the ordinary control state after a control information setting state. In the initial check process, in the case where the reaction force reference value θns has not been internally set, the CPU 50a cannot read the reaction force reference value θns. The control information setting state is a state of execution of a control information setting process for integrally setting the reaction force reference value θns by a learning operation in which the steering wheel 3, that is, the steering shaft 11 is rotated in a right-left direction. In the embodiment, the control information setting state is an example of the second state.

For example, the control information setting process includes a process of referring to the rotational angle θa. The CPU 50a includes an integrated rotation angle acquisition process for computing a provisional steering angle θsi that is an integrated value that is obtained using the position for the rotation angle θa when the electric power source is in the on-state as a provisional reference value. The provisional steering angle θsi is an integrated rotation angle, that is, an absolute rotation angle. The control information setting process includes a process of referring to the electric currents iu1, iv1, iw1 and the steering torque Th. The control information setting process includes a learning process for internally setting the reaction force reference value θns based on the provisional steering angle θsi, the electric currents iu1, iv1, iw1, and the steering torque Th.

More specifically, as shown in FIG. 4, in the learning process, the CPU 50a rotates the steering wheel 3 in one of the right and left directions, that is, in the rightward direction that is a first direction (step 202). In step 202, the CPU 50a computes the control signal MSs for automatically rotating the steering wheel 3, that is, the steering shaft 11, in the rightward direction. In the learning process, the CPU 50a computes the control signal MSs by executing a feedback control such that the provisional steering angle θsi follows a target steering angle θs*. The target steering angle θs* is a value that is gradually changed and updated so as to exceed the rightward limit position 3a from the value of the provisional steering angle θsi at the time of the start of the learning process.

Subsequently, the CPU 50a determines whether the steering wheel 3 has reached the rightward limit position 3a (step 204). In step 204, for example, the CPU 50a monitors the electric currents iu1, iv1, iw1, the steering torque Th, and an angular velocity ωs that is a change amount of the provisional steering angle θsi.

The CPU 50a executes a process of determining whether the absolute value of an actual electric current value Ia obtained from the electric currents iu1, iv1, iw1 is equal to or more than an electric current threshold Iath. The determination of whether the absolute value of the electric currents iu1, iv1, iw1 is equal to or more than the electric current threshold Iath corresponds to the determination of whether the load on the reaction force motor 13 has increased because the steering shaft 11 has reached the rightward limit position 3a. For example, the electric current threshold Iath is a value in a range that is evaluated by experiments such that the rotation of the steering shaft 11 is regulated through the stopper mechanism 11b and thereby the rotation of the reaction force motor 13 is regulated.

The CPU 50a executes a process of determining whether the absolute value of the steering torque Th is equal to or less than a torque threshold Tth. The determination of whether the absolute value of the steering torque Th is equal to or less than the torque threshold Tth corresponds to the determination of whether the driver has performed steering intervention. For example, the torque threshold Tth is a value in a range that is evaluated by experiments such that it can be determined that the driver has performed steering intervention.

The CPU 50a includes a process of determining whether the absolute value of the angular velocity ωs is equal to or less than an angular velocity threshold ωth. The determination of whether the absolute value of the angular velocity ωs is equal to or less than the angular velocity threshold ωth corresponds to the determination of whether the steering shaft 11 has been stopped because the steering shaft 11 has reached the rightward limit position 3a. For example, the angular velocity threshold ωth is a value in a range that is evaluated by experiments such that the steering shaft 11 is not rotated.

In the case where the CPU 50a determines that the load on the reaction force motor 13 has increased, the driver has not performed steering intervention, and the steering shaft 11 has been stopped, the CPU 50a includes a process of determining that the steering wheel 3 has reached the rightward limit position 3a.

Subsequently, in the case where the CPU 50a determines that the steering wheel 3 has not reached the rightward limit position 3a (step 204: NO), the CPU 50a repeatedly executes the processes in step 202 and step 204. On the other hand, in the case where the CPU 50a determines that the steering wheel 3 has reached the rightward limit position 3a (step 204: YES), the CPU 50a temporarily stores a right limit position θrl (step 206). In step 206, as the right limit position θrl, the CPU 50a temporarily stores the provisional steering angle θsi when it is determined that the steering wheel 3 has reached the rightward limit position 3a.

Subsequently, the CPU 50a rotates the steering wheel 3 in the opposite direction of the rightward direction, that is, in the leftward direction that is a second direction (step 208). In step 208, the CPU 50a computes the control signal MSs for automatically rotating the steering wheel 3, that is, the steering shaft 11, in the leftward direction. For example, similarly to the process in step 202, the CPU 50a computes the control signal MSs by executing a feedback control such that the provisional steering angle θsi follows the target steering angle θs*. The target steering angle θs* is a value that is gradually changed and updated so as to exceed the leftward limit position 3b from the value of the provisional steering angle θsi when the steering wheel 3 has reached the rightward limit position 3a.

Subsequently, the CPU 50a determines whether the steering wheel 3 has reached the leftward limit position 3b (step 210). In step 210, similarly to the process in step 204, for example, the CPU 50a monitors the electric currents iu1, iv1, iw1, the steering torque Th, and the angular velocity ωs that is a change amount of the provisional steering angle θsi.

Subsequently, in the case where the CPU 50a determines that the steering wheel 3 has not reached the leftward limit position 3b (step 210: NO), the CPU 50a repeatedly executes the processes in step 208 and step 210. On the other hand, in the case where the CPU 50a determines that the steering wheel 3 has reached the leftward limit position 3b (step 210: YES), the CPU 50a temporarily stores a left limit position θll (step 212). In step 212, as the left limit position θll, the CPU 50a temporarily stores the provisional steering angle θsi when it is determined that the steering wheel 3 has reached the leftward limit position 3b.

Subsequently, the CPU 50a computes a mid-point value θc (step 214). In step 214, as the mid-point value θc, the CPU 50a computes a value corresponding to one-half of the sum of the right limit position θrl temporarily stored in step 206 and the left limit position θll temporarily stored in step 212. The mid-point value θc may be computed by adding a value corresponding to one-half of the difference between the right limit position θrl and the left limit position θll, to the left limit position θll. The absolute value of the difference between the mid-point value θc and the right limit position θrl and the absolute value of the difference between the mid-point value θc and the left limit position θll are equal to each other. The CPU 50a writes and sets the mid-point value θc obtained in step 214, as the reaction force reference value θns, and ends the process, to transition to another process. In the embodiment, the limit positions θrl, θll are examples of the first limit position and the second limit position.

Detection of Abnormality of Stopper Mechanism

While the electric power source is in the on-state, the CPU 50a of the reaction force control unit 50 executes an abnormality detection process for detecting an abnormality of the stopper mechanism 11b in the vehicle steering system 2. The abnormality detection process includes processes in modes depending on the ordinary control state and the control information setting state.

First Abnormality Detection Process

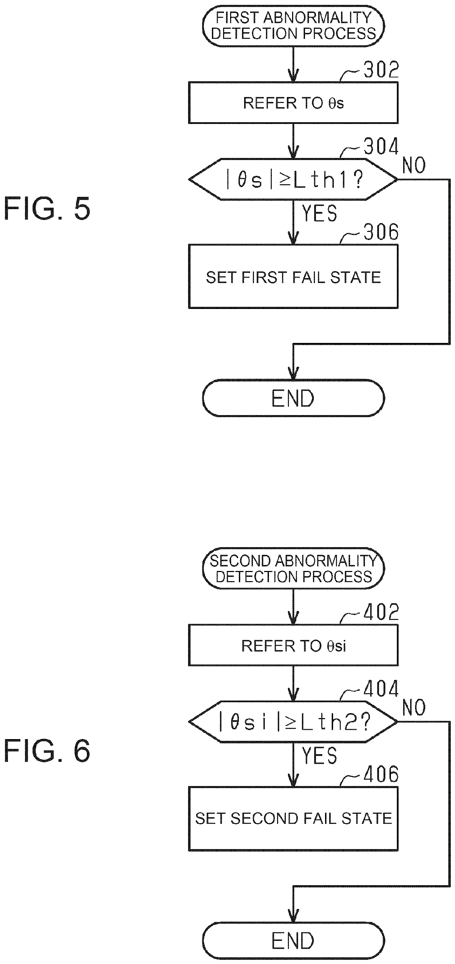

For example, as shown in FIG. 5, in the ordinary control state, the CPU 50a executes a first abnormality detection process. More specifically, the CPU 50a refers to the steering angle θs (step 302). The steering angle θs in step 302 is a first absolute rotation angle that is obtained using the reaction force reference value θns as a reference.

Subsequently, the CPU 50a determines whether the absolute value of the steering angle θs is equal to or less than a first threshold Lth1 (step 304). In step 304, the CPU 50a determines whether the steering angle θs is out of the regulatory rotation amount θ1 of the steering wheel 3. For example, the first threshold Lth1 is set to a value in a range in which it can be determined that the steering angle θs is out of the regulatory rotation amount θ1 of the steering wheel 3. The first threshold Lth1 is set such that a lower limit value and an upper limit value are provided, as shown in the following Expression (1).

$$\theta 2 \leq \mathrm{Lth}1 \leq \mathrm{Lca} \ \dots \ (1)$$

Here, "θ2" is the absolute value of an angle corresponding to the rightward limit position 3a or the leftward limit position 3b, for example, the absolute value of the right limit position θrl or the absolute value of the left limit position θll. That is, "θ2" is a value ($\theta1 \times (1/2)$) of half of the regulatory rotation amount θ1 of the steering wheel 3. Further, "Lca" is the total length of the spiral cable 15d. That is, the first threshold Lth1 is a value that is larger than at least the value θ2 of half of the regulatory rotation amount θ1 of the steering wheel 3 and is not exceeding the total length Lca of the spiral cable 15d.

In the embodiment, the first threshold Lth1 is a value for which a mechanical tolerance θ3 and a detection margin θ4 are considered. The mechanical tolerance θ3 is the tolerance of the steering unit 4. The detection margin θ4 is a margin for restraining false determination when the CPU 50a executes step 304. That is, the first threshold Lth1 is a value resulting from adding "θ2", "θ3", and "θ4".

In the case where the absolute value of the steering angle θs is less than the first threshold Lth1, the CPU 50a determines that an abnormality condition is not satisfied. In this case, the CPU 50a does not detect the abnormality of the stopper mechanism 11b. On the other hand, in the case where the absolute value of the steering angle θs is equal to or more than the first threshold Lth1, the CPU 50a determines that the abnormality condition is satisfied. In this case, the CPU 50a detects the abnormality of the stopper mechanism 11b.

Subsequently, in the case where the absolute value of the steering angle θs is less than the first threshold Lth1 (step 304: NO), the CPU 50a determines that the abnormality of the stopper mechanism 11b has not been detected, and ends the process, to transition to another process. On the other hand, in the case where the absolute value of the steering angle $\theta s$ is equal to or more than the first threshold Lth1 (step 304: YES), the CPU 50a determines that the abnormality of the stopper mechanism 11b has been detected, and sets a first fail state (step 306). In step 306, the CPU 50a computes the control signal MSs by executing a feedback control such that the steering angle $\theta s$ follows an angle corresponding to the closest end threshold $\theta th$. For example, the angle corresponding to the closest end threshold $\theta th$ is an angle on the rightward limit position 3a side in the case where the steering wheel 3 rotates in the right direction, and is an angle on the leftward limit position 3b in the case where the steering wheel 3 rotates in the left direction.

In the first fail state, the CPU 50a includes a process of giving a notice indicating that it has been determined that the abnormality of the stopper mechanism 11b has been detected, to another control device equipped in the vehicle. For example, the other control device is a display device that gives an information notice by appealing to the visual sense of the driver, and controls the operation for warning or the like. Examples of the display device include a head up display (HUD), a meter panel, a display of a navigation system, and a light emitting diode (LED). In the case where the CPU 50a gives the notice indicating that it has been determined that the abnormality of the stopper mechanism 11b has been detected, the CPU 50a, after the first fail state is set once, continues to give the notice to the other control device equipped in the vehicle, while the electric power source is in the on-state, even when the electric power source is temporarily turned off.

Second Abnormality Detection Process

For example, as shown in FIG. 6, in the control information setting state, the CPU 50a executes a second abnormality detection process. More specifically, the CPU 50a refers to the provisional steering angle $\theta si$ (step 402). The provisional steering angle $\theta si$ in step 402 is a second absolute rotation angle that is not obtained using the reaction force reference value $\theta ns$ as a reference.

Subsequently, the CPU 50a determines whether the absolute value of the provisional steering angle $\theta si$ is equal to or more than a second threshold Lth2 (step 404). In step 404, the CPU 50a determines whether the provisional steering angle $\theta si$ is out of the regulatory rotation amount $\theta 1$ of the steering wheel 3. For example, the second threshold Lth2 is set to a value in a range in which it can be determined that the provisional steering angle $\theta si$ is out of the regulatory rotation amount $\theta 1$ of the steering wheel 3. The second threshold Lth2 is set such that a lower limit value and an upper limit value are provided, as shown in the following Expressions (2) and (3).

$$\theta 1 \leq Lth2 \ ... \ (2)$$

$$Lth2 + (Lth1 + \theta 5) \leq Lca \ ... \ (3)$$

Here, "$\theta 1$", "Lca", and "Lth1" are the same as those in Expression (1). Further, "$\theta 5$" is an adjustment amount relevant to the configuration of the lock mechanism 16. For example, the adjustment amount $\theta 5$ is an amount by which the steering shaft 11 shifts in one of the right and left directions when the lock mechanism 16 becomes the lock state and thereby is fit in the gear portion of the steering shaft 11. That is, the adjustment amount $\theta 5$ is a value corresponding to one tooth of the gear portion of the steering shaft 11.

From Expressions (2) and (3), the following Expression (4) is obtained.

$$\theta 1 \leq Lth2 \leq Lca - (Lth1 + \theta 5) \ ... \ (4)$$

That is, the second threshold Lth2 is a value that is equal to or more than at least the regulatory rotation amount $\theta 1$ of the steering wheel 3 and is not exceeding the total length Lca of the spiral cable 15d.

In the embodiment, the second threshold Lth2 is a value for which the mechanical tolerance $\theta 3$ and a detection margin $\theta 6$ are considered. The detection margin $\theta 6$ is a margin for restraining false determination when the CPU 50a executes step 404. For example, the detection margin $\theta 6$ is a value that is smaller than the detection margin $\theta 4$ in the ordinary control state. That is, the second threshold Lth2 is equal to or more than a value resulting from adding "$\theta 1$", "$\theta 3$", and "$\theta 6$".

In the case where the absolute value of the provisional steering angle $\theta si$ is less than the second threshold Lth2, the CPU 50a determines that the abnormality condition is not satisfied. In this case, the CPU 50a does not detect the abnormality of the stopper mechanism 11b. On the other hand, in the case where the absolute value of the provisional steering angle $\theta si$ is equal to or more than the second threshold Lth2, the CPU 50a determines that the abnormality condition is satisfied. In this case, the CPU 50a detects the abnormality of the stopper mechanism 11b.

Subsequently, in the case where the absolute value of the provisional steering angle $\theta si$ is less than the second threshold Lth2 (step 404: NO), the CPU 50a determines that the abnormality of the stopper mechanism 11b has not been detected, and ends the process, to transition to another process. On the other hand, in the case where the absolute value of the provisional steering angle $\theta si$ is equal to or more than the second threshold Lth2 (step 404: YES), the CPU 50a determines that the abnormality of the stopper mechanism 11b has been detected, and sets a second fail state (step 406). In step 406, the CPU 50a computes the control signal MSs by executing a feedback control such that the provisional steering angle θsi is maintained at the current angle.

In the second fail state, similarly to the first fail state, the CPU 50a executes a process of giving a notice indicating that it has been determined that the abnormality of the stopper mechanism 11b has been detected, to another control device equipped in the vehicle. That is, in the case where the CPU 50a gives the notice indicating that it has been determined that the abnormality of the stopper mechanism 11b has been detected, the CPU 50a, after the second fail state is set once, continues to give the notice to the other control device equipped in the vehicle, while the electric power source is in the on-state, even when the electric power source is temporarily turned off.

Operation of Embodiment

The first abnormality determination process in FIG. 5 includes the process (step 304) of determining whether the absolute value of the steering angle θs is equal to or more than the first threshold Lth1.

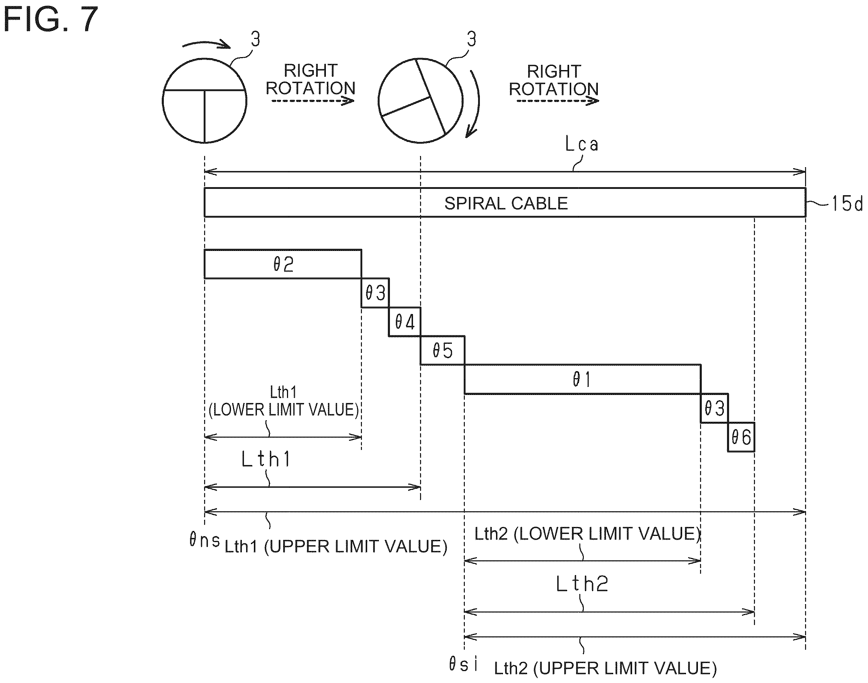

For example, as shown in FIG. 7, in the ordinary control state, in the case where the steering wheel 3 rotates in the right direction with respect to the reaction force reference value θns and where the steering angle θs is equal to or more than the first threshold Lth1, there is a high probability that the steering wheel 3 rotates beyond the rightward limit position 3a. This is because the first threshold Lth1 is equal to or more than "θ2" and is equal to or less than "Lca" as shown by Expression (1).

The lower limit value of the first threshold Lth1 is set to "θ2", assuming a situation where the steering wheel 3 rotates in the rightward direction beyond half of the regulatory rotation amount θ1 in the ordinary control state. That is, the first threshold Lth1 is set assuming a situation where the steering wheel 3 rotates beyond the rightward limit position 3a or the leftward limit position 3b in the ordinary control state.

The upper limit value of the first threshold Lth1 is set to "Lca", assuming a situation where the steering wheel 3 rotates in the rightward direction without exceeding the total length Lca of the spiral cable 15d in the ordinary control state. That is, the first threshold Lth1 is set assuming a situation where the steering wheel 3 rotates in the right-left direction without exceeding the total length Lca of the spiral cable 15d in the ordinary control state.

Thereby, by executing the process in step 304, the CPU 50a can detect that the steering angle θs is out of the regulatory rotation amount θ1 of the steering wheel 3, using software. The CPU 50a can detect that the steering angle θs is out of the regulatory rotation amount θ1 of the steering wheel 3, in a range in which the total length Lca of the spiral cable 15d is not exceeded, using software.

The second abnormality determination process in FIG. 6 includes the process (step 404) of determining whether the absolute value of the provisional steering angle θsi is equal to or more than the second threshold Lth2. For example, as shown in FIG. 7, in the control information setting state, in the case where the steering wheel 3 rotates in the rightward direction through the learning operation and where the provisional steering angle θsi is equal to or more than the second threshold Lth2, there is a high probability that the steering wheel 3 rotates beyond the rightward limit position 3a. This is because the second threshold Lth2 is a value that is equal to or more than "θ1" and that is equal to or less than the value resulting from subtracting "Lth1" and "θ5" from "Lca" as shown by Expression (4).

The lower limit value of the second threshold Lth2 is set to "θ1", assuming a first situation where the steering wheel 3 has rotated to the leftward limit position 3b in the initial state. That is, the second threshold Lth2 is set assuming the first situation where the steering wheel 3, in the initial state, has rotated to the limit position on the opposite side of the direction in which the steering wheel 3 rotates through the learning operation.

Further, the upper limit value of the second threshold Lth2 is set to the value resulting from subtracting "Lth1" and "θ5" from "Lca", assuming that a second situation where the initial state of the steering wheel 3 is the state corresponding to the first threshold Lth1. The upper limit value of the second threshold Lth2 is set to the value resulting from subtracting "Lth1" and "θ5" from "Lca", assuming a situation where the steering wheel 3 rotates in the rightward direction from the second situation without exceeding the total length Lca of the spiral cable 15d. That is, the second threshold Lth2 is set assuming the second situation where the steering wheel 3, in the initial state, has rotated to the vicinity of the limit position on the side in the direction in which the steering wheel 3 rotates through the learning operation. Even when the first situation and the second situation are assumed, the second threshold Lth2 is set assuming a situation where the steering wheel 3 rotates in the right-left direction through the learning operation without exceeding the total length Lca of the spiral cable 15d.

Thereby, by executing the process in step 404, the CPU 50a can detect that the provisional steering angle θsi is out of the regulatory rotation amount θ1 of the steering wheel 3, using software. The CPU 50a can detect that the provisional steering angle θsi is out of the regulatory rotation amount θ1 of the steering wheel 3, in a range in which the total length Lca of the spiral cable 15d is not exceeded, using software.

Effects of Embodiment

(1-1) The CPU 50a of the reaction force control unit 50 executes the first abnormality determination process in FIG. 5 and the second abnormality determination process in FIG. 6 for detecting the abnormality of the stopper mechanism 11b. Thereby, in the vehicle steering system 2, even when the stopper mechanism 11b becomes incapable of mechanically restricting the rotation range of the steering shaft 11, early detection is possible.

Accordingly, even when such a matter that the steering shaft 11 continues to rotate unlimitedly occurs, it is possible to cope with this matter at an early stage.

(1-2) The CPU 50a executes a process in which the satisfaction requirement of the abnormality condition is different depending on whether the state is the ordinary control state or the control information setting state. Thereby, in the vehicle steering system 2 in which the ordinary control state and the control information setting state can be set, it is possible to appropriately determine that the steering angle $\theta s$ and the provisional steering angle $\theta si$ are out of the regulatory rotation amount $\theta 1$ of the steering wheel 3, regardless of the state. Accordingly, it is possible to detect the abnormality of the stopper mechanism 11b at an early stage, regardless of whether the reaction force reference value $\theta ns$ has been internally set.

(1-3) In the first abnormality determination process, when the magnitude of the steering angle $\theta s$ is determined in the ordinary control state, the first threshold Lth1 is used, and thereby, a process of appropriately determining the abnormality of the stopper mechanism 11b is included. On the other hand, in the second abnormality determination process, when the magnitude of the provisional steering angle $\theta si$ is determined in the control information setting state, the second threshold Lth2 different from the first threshold Lth1 is used, and thereby, it is possible to appropriately determine the abnormality of the stopper mechanism 11b. Thereby, it is possible to execute the determination depending on the ordinary control state and the control information setting state.

(1-4) For example, as a supposable initial state of the steering wheel 3 in the control information setting state, a situation where the steering wheel 3 rotates until just before the transition to the state corresponding to the first threshold Lth1 is possible. In this situation, in the case where the lock mechanism 16 is in the lock state, it is possible that the steering wheel 3 rotates beyond the first threshold Lth1 due to the configuration of the lock mechanism 16 also. However, the upper limit value of the second threshold Lth2 is a value for which the adjustment amount $\theta 5$ is considered. Thereby, it is possible to appropriately detect the abnormality of the stopper mechanism 11b.

(1-5) As shown in FIG. 7, the first threshold Lth1 is a value for which the mechanical tolerance $\theta 3$ and the detection margin $\theta 4$ are considered. As shown in FIG. 7, the second threshold Lth2 is a value for which the mechanical tolerance $\theta 3$ and the detection margin $\theta 6$ are considered. Thereby, it is possible to appropriately restrain the false detection of the abnormality of the stopper mechanism 11b.

(1-6) As shown in FIG. 7, the first threshold Lth1 is a value in the range in which the total length Lca of the spiral cable 15d is not exceeded. As shown in FIG. 7, the second threshold Lth2 is a value in the range in which the total length Lca of the spiral cable 15d is not exceeded.

Particularly, the second threshold Lth2 is a value that is smaller than the total length Lca of the spiral cable 15d by at least a value resulting from adding "Lth1" and "$\theta 5$". Thereby, even when the stopper mechanism 11b becomes incapable of mechanically restricting the rotation range of the steering shaft 11, it is possible to restrain an excessively great force from being given to the spiral cable 15d. Accordingly, it is possible to secure also the protection of the spiral cable 15d.

(1-7) The CPU 50a executes the learning process for internally setting the reaction force reference value $\theta ns$, as the process that is executed in the control information setting state. Thereby, it is possible to appropriately detect the abnormality of the stopper mechanism 11b even during the learning operation.

Other Embodiments

The above embodiment may be modified as follows. Further, the following other embodiments can be combined with each other within a range in which there is no technical inconsistency.

The lower limit value of the first threshold Lth1 may be a value for which "$\theta 3$" or "$\theta 4$" is considered. For example, the lower limit value of the first threshold Lth1 may be a value resulting from adding "$\theta 2$", "$\theta 3$", and "$\theta 4$". Further, the upper limit value of the first threshold Lth1 may be a value for which "$\theta 5$" is considered. Further, depending on the magnitude of the total length Lca of the spiral cable 15d, the upper limit value of the first threshold Lth1 may be a value of half of the total length Lca or a value that is smaller than the value of half of the total length Lca.

The lower limit value of the second threshold Lth2 may be a value for which "$\theta 3$" or "$\theta 6$" is considered. For example, the upper limit value of the second threshold Lth2 may be a value resulting from adding "$\theta 1$", "$\theta 3$", and "$\theta 6$". Further, the upper limit value of the second threshold Lth2 only needs to be a value for which at least "Lth1" is considered, and may be a value for which "$\theta 5$" is not considered.

The mechanical tolerance $\theta 3$ is a value that can be altered when appropriate depending on the configuration of the steering unit 4.

An identical value may be adopted as the detection margin $\theta 4$ and the detection margin $\theta 6$.

The adjustment amount $\theta 5$ is a value that can be altered when appropriate depending on the configuration of the lock mechanism 16.

In the first fail state, the CPU 50a may compute the control signal MSs by executing a feedback control such that the steering angle $\theta s$ is maintained at the current angle.

In the second fail state, the CPU 50a may switch the lock mechanism 16 to the lock state.

The CPU 50a may execute only one of the first abnormality determination process and the second abnormality determination process. That is, it is allowable to adopt a configuration in which the abnormality of the stopper mechanism 11b is detected in only one of the ordinary control state and the control information setting state.

The second abnormality determination process can be applied as a process that is executed in the ordinary control state. In the case where the steering wheel 3 is roughly at the steering neutral position as a supposable initial state of the steering wheel 3 in the control information setting state, the first abnormality determination process can be applied as a process that is executed in the control information setting state.

The method for internally setting the reaction force reference value θns is not limited to the method in which the learning operation is performed, and can be altered when appropriate, for example, to a method in which the setting is manually performed by a worker.

The learning process may be a process of first rotating the steering wheel 3 in the leftward direction and thereafter rotating the steering wheel 3 in the rightward direction. In this case, the process in FIG. 4 may be configured such that the processes in steps 208, 210 and 212 may be executed before the processes in steps 202, 204 and 206.

The learning process only needs to include a process of temporarily storing one of the respective limit positions θrl, θll. That is, the process about the learning operation may exclude a process of temporarily storing the other of the respective limit positions θrl, θll. For example, in the case where a process of temporarily storing the right limit position θrl is included, the CPU 50a may compute a value that is obtained by subtracting the value θ2 of half of the regulatory rotation amount θ1 from the right limit position θrl, as the mid-point value θc.

The learning process may include a process of determining the validity of the mid-point value θc.
In the learning process, the processes in step 204 and step 210 only need to be processes of determining at least whether the absolute value of the actual electric current value Ia is equal to or more than the electric current threshold Iath.

In the learning process, in addition to the above embodiment, other parameters may be considered in the processes in step 204 and step 210. Examples of the other parameters can include the change amount of the actual electric current value Ia, the change amount of the angular velocity ωs, and the time from start of the rotation of the steering wheel 3.

The CPU 50a may execute a control to perform the switching between the lock state and unlock state of the lock mechanism 16.
The displacement amount of the steering wheel 3 is not limited to an amount that is calculated based on the integration process of the rotational angle θa. For example, the detection value of a rudder angle sensor that directly detects the rotational angle of the steering shaft 11 may be adopted. For example, the rudder angle sensor may be provided in the steering shaft 11 between the steering wheel 3 and the torque sensor 41. In this described other embodiment, the rudder angle sensor is an example of the angle sensor.

The steering actuator 12 does not need to include the steering-side speed reduction mechanism 14. The reaction force motor 13 is not limited to the three-phase brushless motor. For example, a direct-current motor with a brush may be adopted. This described other embodiment can be applied to the turning motor 32 similarly.

The turning unit 6 transmits the rotation of the turning motor 32 to the transformation mechanism 34 through the transmission mechanism 33, but without being limited to this, for example, the turning unit 6 may be configured to transmit the rotation of the turning motor 32 to the transformation mechanism 34 through a gear mechanism. Further, the turning unit 6 may be configured such that the turning motor 32 directly rotates the transformation mechanism 34. Furthermore, the turning unit 6 may be configured to include a second rack-and-pinion mechanism, and the turning unit 6 may be configured such that the second rack-and-pinion mechanism transforms the rotation of the turning motor 32 into the reciprocating motion of the rack shaft 22.

The turning unit 6 is not limited to a configuration in which the turning wheel 5 on the right side and the turning wheel 5 on the left side are interlocked. In other words, the turning wheel 5 on the right side and the turning wheel 5 on the left side may be controlled independently.

The vehicle steering system 2 has a link-less structure in which the steering unit 4 and the turning unit 6 are mechanically separated at all times, in the above embodiment, but without being limited to this, may have a structure in which the steering unit 4 and the turning unit 6 can be mechanically separated by a clutch, for example.

**Claims**

1. A steering control device (1) that is applied to a vehicle steering system having a structure in which a dynamic power transmission path between a steering unit (4) and a turning unit (6) is cut off, the steering unit (4) being configured to be steered by a steering wheel (3) of a vehicle, the turning unit (6) being configured to operate so as to turn a turning wheel of the vehicle, the steering unit (4) including a steering shaft (11) coupled to the steering wheel (3), a reaction force motor (13) configured to give a motor torque to the steering shaft (11) so as to give a steering reaction force to the steering wheel (3), a stopper mechanism (11b) configured to regulate a rotation of the steering shaft (11) in a right-left direction within a regulatory rotation amount, and an angle sensor (42) configured to detect a rotation angle of the steering shaft (11),

the steering control device (1) **characterized by** comprising a processor (50a) that controls the steering unit (4), the steering unit (4) using the reaction force motor (13) as a drive source, the processor (50a) being configured to execute:

an integrated rotation angle acquisition process of acquiring an integrated rotation angle based on a detection result of the angle sensor (42), the integrated rotation angle being an integrated value of the rotation angle of the steering shaft (11); and an abnormality determination process of determining whether an abnormality condition is satisfied, based on the integrated rotation angle, the abnormality condition being a condition for detecting an abnormality of the stopper mechanism (11b), wherein the abnormality determination process includes a process of determining that the abnormality condition is satisfied, when the processor (50a) is capable of determining that the integrated rotation angle is out of the regulatory rotation amount.

2. The steering control device (1) according to claim 1, **characterized in that**:

the integrated rotation angle acquisition process includes

a process of acquiring a first absolute rotation angle in a first state where a reference value indicating a neutral position of the steering wheel (3) has been internally set, the first absolute rotation angle being the integrated rotation angle with respect to the reference value, and a process of acquiring a second absolute rotation angle in a second state where the reference value has not been internally set, the second absolute rotation angle being the integrated rotation angle for which the reference value is not used as a reference; and

the abnormality determination process includes

a first abnormality determination process of determining that the abnormality condition is satisfied, based on the first absolute rotation angle, in the first state, and a second abnormality determination process of determining that the abnormality condition is satisfied, based on the second absolute rotation angle, in the second state.

3. The steering control device (1) according to claim 2, **characterized in that**:

the first abnormality determination process is a process of determining that the abnormality condition is satisfied, when the processor (50a) is capable of determining that a magnitude of the first absolute rotation angle is equal to or more than a first threshold, the first threshold being a value that is equal to or more than half of the regulatory rotation amount; and the second abnormality determination process is a process of determining that the abnormality condition is satisfied, when the processor (50a) is capable of determining that a magnitude of the second absolute rotation angle is equal to or more than a second threshold, the second threshold being a value that is equal to or more than the regulatory rotation amount.

4. The steering control device (1) according to claim 3, **characterized in that**:

the steering unit (4) includes a lock mechanism (16) configured to mechanically lock the rotation of the steering shaft (11); the second state is a state to which the steering control device (1) transitions from a state where the lock mechanism (16) locks the rotation of the steering shaft (11); the first state includes a state to which the steering control device (1) transitions after the second state; and the second threshold is a value for which the first threshold and at least an adjustment amount relevant to a configuration of the lock mechanism (16) are considered.

5. The steering control device (1) according to any one of claims 2 to 4, **characterized in that**:

the reference value is a value that is acquired by a learning operation in which the steering shaft (11) is moved to a limit position in a first direction and a limit position in a second direction; the processor (50a) is configured to execute a learning process in the second state, the learning process being a process for internally setting the reference value by the learning operation; and the learning process includes

a process of acquiring, during the learning operation, a first limit position that is an angle corresponding to a position of the steering shaft (11) at the limit position in the first direction and a second limit position that is an angle corresponding to a position of the steering shaft (11) at the limit position in the second direction, and
a process of setting the reference value based on the limit position acquired for each direction.

6. A steering control method that is applied to a vehicle steering system having a structure in which a dynamic power transmission path between a steering unit (4) and a turning unit (6) is cut off, the steering unit (4) being configured to be steered by a steering wheel (3) of a vehicle, the turning unit (6) being configured to operate so as to turn a turning wheel of the vehicle,

the steering control method **characterized by** comprising controlling the steering unit (4) by a processor (50a), the steering unit (4) using a reaction force motor (13) as a drive source, the reaction force motor (13) being configured to give a motor torque to a steering shaft (11) coupled to the steering wheel (3), so as to give a steering reaction force to the steering wheel (3), wherein
the controlling the steering unit (4) by the processor (50a) includes:

acquiring an integrated rotation angle based on a detection result of an angle sensor (42) configured to detect a rotation angle of the steering shaft (11), the integrated rotation angle being an integrated value of the rotation angle of the steering shaft (11); and
determining whether an abnormality condition is satisfied, based on the integrated rotation angle, the abnormality condition being a condition for detecting an abnormality of a stopper mechanism (11b) configured to regulate a rotation of the steering shaft (11) in a right-left direction within a regulatory rotation amount,
the determining whether the abnormality condition is satisfied including determining that the abnormality condition is satisfied, when the processor (50a) is capable of determining that the integrated rotation angle is out of the regulatory rotation amount.

FIG. 1

# FIG. 2

EP 4 484 254 A1

# FIG. 3

END REACTION FORCE
OUTPUT PROCESS

~102

$|\theta s| \geq \theta th?$ —— NO

YES

~104

COMPUTE END
REACTION FORCE

END

# FIG. 4

LEARNING PROCESS

~202

ROTATE STEERING
WHEEL RIGHTWARD

~204

HAS STEERING
WHEEL REACHED
RIGHTWARD LIMIT
POSITION? —— NO

YES

~206

STORE RIGHT
LIMIT POSITION

~208

ROTATE STEERING
WHEEL LEFTWARD

~210

HAS STEERING
WHEEL REACHED
LEFTWARD LIMIT
POSITION? —— NO

YES

~212

STORE LEFT
LIMIT POSITION

~214

COMPUTE
MID-POINT VALUE

END

FIG. 5

FIRST ABNORMALITY
DETECTION PROCESS

~302

REFER TO θs

~304

$|θs| \geq Lth1?$ — NO

YES

~306

SET FIRST FAIL STATE

END

FIG. 6

SECOND ABNORMALITY
DETECTION PROCESS

~402

REFER TO θsi

~404

$|θsi| \geq Lth2?$ — NO

YES

~406

SET SECOND FAIL STATE

END

FIG. 7

EP 4 484 254 A1

Europäisches
Patentamt

European
Patent Office

Office européen
des brevets

# EUROPEAN SEARCH REPORT

Application Number

EP 24 18 3315

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/130733 A1 (HWANG SANG WOO [KR] ET AL) 30 April 2020 (2020-04-30) * paragraph [0019]; claim 1 * * paragraph [0046] * * paragraph [0089] * | 1,6 | INV. B62D5/00 B62D5/04 |
| A | US 2019/389503 A1 (HWANG SANG WOO [KR] ET AL) 26 December 2019 (2019-12-26) * abstract * | 1,6 | |
| A | CN 115 916 631 A (HONDA MOTOR CO LTD; THYSSENKRUPP PRESTA AG) 4 April 2023 (2023-04-04) * claims 1-3; figures 1,2 * | 1,6 | |

TECHNICAL FIELDS
SEARCHED (IPC)

B62D

The present search report has been drawn up for all claims

| Place of search | Date of completion of the search | Examiner |
|---|---|---|
| The Hague | 23 October 2024 | Pemberton, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 3315

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2024

| Patent document cited in search report | Publication date | Patent family member(s) | Publication date |
|---|---|---|---|
| US 2020130733 A1 | 30-04-2020 | CN 111098913 A | 05-05-2020 |
| | | KR 20200047871 A | 08-05-2020 |
| | | US 2020130733 A1 | 30-04-2020 |
| US 2019389503 A1 | 26-12-2019 | KR 20190143575 A | 31-12-2019 |
| | | US 2019389503 A1 | 26-12-2019 |
| CN 115916631 A | 04-04-2023 | CN 115916631 A | 04-04-2023 |
| | | DE 112021002651 T5 | 06-04-2023 |
| | | JP 7361209 B2 | 13-10-2023 |
| | | JP 2023519048 A | 10-05-2023 |
| | | US 2023264738 A1 | 24-08-2023 |
| | | WO 2022185398 A1 | 09-09-2022 |

EPO FORM P0459

For more details about this annex : see Official Journal of the European Patent Office, No. 12/82

**EP 4 484 254 A1**

**Patent documents cited in the description**

- JP 2020069844 A